# EUROPÄISCHE PATENTANMELDUNG

(11) **EP 2 946 822 A1**
(43) Veröffentlichungstag der Anmeldung: **25.11.2015**
(21) Anmeldenummer: 14001795.5
(22) Anmeldetag: 22.05.2014
(51) Int. Cl.: B01D 19/00, B01D 46/00

(54) **Trenneinrichtung zum Trennen einer gasförmigen von einer flüssigen Phase eines zweiphasigen Stoffstromes**

(71) Anmelder: Linde Aktiengesellschaft, 80331 München (DE)
(72) Erfinder: Matten, Christian, 82049 Pullach (DE)
(74) Vertreter: Meilinger, Claudia Sabine

(57) **Zusammenfassung**

Die Erfindung betrifft eine Trenneinrichtung (1) zum Trennen einer gasförmigen Phase (G) von einer flüssigen Phase (F) eines zweiphasigen Stoffstromes (S), mit:
einem ersten Kanal (100) zum Führen des zu entgasenden Stoffstromes (S) in einer entlang des Kanals (100) erstreckten Strömungsrichtung (R), und
einem Raum (200) zur Aufnahme der gasförmigen Phase (G). Erfindungsgemäß ist vorgesehen, dass der erste Kanal (100) durch ein Element (10) mit einer Mehrzahl an Durchgangsöffnungen (11), das sich entlang des ersten Kanals (100) erstreckt, von dem Raum (200) abgeteilt ist, wobei ein entlang des ersten Kanals (100) erstreckter Tropfenabscheider (20) auf einer dem ersten Kanal (100) abgewandten Seite des Elements (10) angeordnet ist, so dass die gasförmige Phase (G) quer zur Strömungsrichtung (R) des Stoffstromes (S) durch jene Durchgangsöffnungen (11) des Elementes (10) sowie den Tropfenabscheider (20) hindurchtreten und in jenen Raum (200) gelangen kann, wobei der Tropfenabscheider (20) dazu ausgebildet ist, in der gasförmige Phase (G) mitgerissene Tropfen der flüssigen Phase (F) zurückzuhalten. Des Weiteren betrifft die Erfindung eine Einrichtung mit einer solchen Trenneinrichtung sowie ein Verfahren zum Trennen einer gasförmigen Phase von einer flüssigen Phase.

## Beschreibung

Die Erfindung betrifft eine Trenneinrichtung zum Trennen einer gasförmigen Phase von einer flüssigen Phase eines zumindest zweiphasigen Stoffstromes gemäß Anspruch 1, eine Einrichtung, insbesondere einen gewickelten Wärmeübertrager, mit einer solchen Trenneinrichtung gemäß Anspruch 11 sowie des Weiteren ein entsprechendes Verfahren zum Trennen des zumindest zweiphasigen Stoffgemisches gemäß Anspruch 14.

In derartigen Trenneinrichtungen werden oftmals Gestricke verwendet, die durch die gasförmige Phase mitgerissene Tropfen zurückhalten sollen. Diesbezüglich ist aus der DE 10 2010 047 299 A1 eine Trenneinrichtung bekannt, bei der der zweiphasige Stoffstrom vertikal auf ein Prallblech prallt, wobei die aufsteigende Gasphase durch ein Gestrick zum Abscheiden von Flüssigkeitströpfchen geführt wird. Derartige Anordnungen benötigen in vertikaler Richtung einen vergleichsweise großen Bauraum und sind daher nur begrenzt einsetzbar. Weiterhin betrifft die US 6,080,228 eine Abscheideeinheit mit einem Gewebeblock zum Abscheiden von Flüssigkeitstropfen aus einem zweiphasigen Strom, bei der der gesamte Strom durch den Gewebeblock geführt wird. Hieran ist nachteilig, dass lediglich Stoffströme mit einem vergleichsweise geringen Flüssigkeitsanteil prozessiert werden können, da ansonsten der Gewebeblock geflutet wird und eine Gasabtrennung nicht mehr möglich ist.

Der vorliegenden Erfindung liegt daher die Aufgabe zugrunde, eine Trenneinrichtung sowie ein Verfahren der eingangs genannten Art bereitzustellen, die bzw. das die vorgenannten Nachteile mindert.

Diese Aufgabe wird durch eine Trenneinrichtung mit den Merkmalen des Anspruchs 1 gelöst.

Danach ist vorgesehen, dass der erste Kanal durch ein Element mit einer Mehrzahl an Durchgangsöffnungen (z.B. in Form einer Lochplatte), das sich entlang des ersten Kanals erstreckt, von dem Raum getrennt ist, wobei ein entlang des ersten Kanals erstreckter Tropfenabscheider auf einer dem ersten Kanal abgewandten Seite des Elements angeordnet ist, so dass die gasförmige Phase quer zur Strömungsrichtung des Stoffstromes durch jene Durchgangsöffnungen des Elementes sowie den Tropfenabscheider hindurchtreten und in jenen Raum gelangen kann, wobei der Tropfenabscheider dazu ausgebildet ist, in der gasförmige Phase mitgerissene Tropfen aus der flüssigen Phase abzuscheiden.

Auf diese Art und Weise kann die gasförmige Phase auf einer gesamten Länge des ersten Kanals bzw. eines Abschnittes des ersten Kanals entgasen und senkrecht zur Strömungsrichtung austreten, so dass bei entsprechender horizontaler Auslegung des ersten Kanals ein vergleichsweise geringer Bauraum entlang der Vertikalen notwendig ist. Bevorzugt wird hierbei die Gas/Flüssigtrennung entlang eines langen Weges realisiert, ohne dass die Flüssigkeit umgelenkt oder Gas und Flüssigkeit neu vermischt werden. Das Gas soll entlang eines Weges entweichen, ohne die bei der Umlenkung entstehenden kleinen Tropfen zu erzeugen. Hierdurch werden mit Vorteil die stark unterschiedlichen Trägheitskräfte von Gas und Flüssigkeit genutzt.

Des Weiteren eröffnet das erfindungsgemäße Entgasungsprinzip die Möglichkeit, die Trennung von gasförmiger und flüssiger Phase außerhalb eines Behälters, in dem die flüssige Phase verwendet werden soll (z.B. als Kühlmittel in einem gewickelten Wärmeübertrager), in einer Rohrleitung vorzunehmen, die den zu trennenden Stoffstrom zu dem Behälter transportiert. Hierdurch können in vorteilhafter Weise innerhalb einer Anlage die ohnehin notwendigen Rohrleitungen zwischen einzelnen Anlagenkomponenten bereits zum Entgasen von zweiphasigen Stoffströmen verwendet werden, so dass entsprechende Anlagenteile (z.B. Behälter, insbesondere Wärmeübertrager) kompakter ausfallen können.

Vorzugsweise weist der Tropfenabscheider zum Abscheiden von mitgerissenen Tropfen der flüssigen Phase ein Gewebe, ein Gestrick, Lamellen, ein Streckmetall oder vergleichbare Strukturen, die insbesondere die Koaleszenz der zurückgehaltenen Tropfen befördern. Derartige Strukturen wie Gewebe, Gestricke und dergleichen können z.B. aus einem Metall gefertigt sein. Das Durchgangsöffnungen aufweisende Element, auf dem das Gewebe bzw. der Tropfenabscheider ruht, ist vorzugsweise zur Vergleichsmäßigung des Gasabzuges ausgebildet, um lokale Gas- bzw. Flüssigkeitsgeschwindigkeitsspitzen zu vermeiden, die den Tropfenabscheider lokal zum Fluten bringen. Weiterhin kann dieses Element Spritzer abfangen und so verhindern, dass lokale Flüssigkeitsdurchschüsse (so genannte slugs) den Tropfenabscheider lokal flüssigkeitsseitig fluten. Ferner kann das besagte Element den Tropfenabscheider mechanisch abstützen. Für den Fall, dass das Element z.B. gewellt oder gezackt ist (u.U. auch Rechteckzacken), ist bevorzugt vorgesehen, dass am jeweiligen Tiefpunkt die aus dem Tropfenabscheider herausfließende Flüssigkeit gesammelt und abgeführt wird, wobei der jeweilige Hochpunkt der Gasdurchströmung dient. Das Element kann als Lochplatte oder -blech ausgebildet sein und kann dabei eben oder auch gekrümmt ausgebildet sein (siehe auch unten).

Gemäß einer bevorzugten Ausführungsform der Erfindung ist vorgesehen, dass sich das Element parallel zu einer Kanalwand des ersten Kanals erstreckt bzw. parallel zur Strömungsrichtung des Stoffstromes angeordnet ist.

Gemäß einer bevorzugten Ausführungsform der Erfindung ist weiterhin vorgesehen, dass der Raum durch einen zweiten Kanal gebildet wird, der sich zumindest entlang des Tropfenabscheiders parallel zum ersten bzw. entlang des ersten Kanals erstreckt.

Weiterhin ist gemäß einer bevorzugten Ausführungsform vorgesehen, dass der erste Kanal in einem Abschnitt, in dem das Element entlang des ersten Kanals angeordnet ist, eine im Wesentlichen gleichbleibende (vorzugsweise gleichbleibende) Querschnittfläche für den Stoffstrom aufweist.

Weiterhin ist gemäß einer weiteren bevorzugten Ausführungsform vorgesehen, dass das Element keinen Strömungswiderstand im ersten Kanal für den darin strömenden Stoffstrom bildet. Bevorzugt ist das Element an den äußeren Grenzen (z.B. Kanalwand) des ersten Kanals entlang des ersten Kanals angeordnet, wobei es bevorzugt nicht in den ersten Kanal hineinsteht.

Weiterhin ist gemäß einer bevorzugten Ausführungsform der Erfindung vorgesehen, dass das Element die senkrecht zur Strömungsrichtung des Stoffstromes orientierte Querschnittsfläche des ersten Kanals für den Stoffstrom unbeeinflusst lässt bzw. diese insbesondere nicht reduziert. Das Element ist also insbesondere so angeordnet und/oder ausgebildet, dass es nicht in einen Strömungspfad des Stoffstromes im ersten Kanal hineinragt. Der Stoffstrom kann somit insbesondere nicht das Element in seiner Strömungsrichtung beaufschlagen. Dies können bevorzugt lediglich mit der Gasphase mitgerissene Teile, insbesondere Tropfen, der flüssigen Phase des Stoffstromes, die quer zur Strömungsrichtung des Stoffstromes bzw. flüssigen Phase aus dem Stoffstrom austreten.

Bevorzugt sind das Element und insbesondere der Tropfenabscheider so konfiguriert, dass sie den ersten Kanal nicht verlegen oder verengen bzw. der Stoffstrom durch das Element und insbesondere den Tropfenabscheider keine Änderung seiner Strömungsrichtung in dem ersten Kanal erfährt.

Gemäß einer bevorzugten Ausführungsform ist weiterhin vorgesehen, dass der erste Kanal durch eine erste Rohrleitung begrenzt wird, wobei jenes Element Bestandteil eines Mantels der ersten Rohrleitung sein kann sowie insbesondere einstückig an den Mantel angeformt sein kann. Das erste Element kann z.B. ausgebildet werden, indem die Durchgangsöffnungen direkt in den Mantel der ersten Rohrleitung eingebracht werden.

Gemäß einer bevorzugten Ausführungsform ist weiterhin vorgesehen, dass der erste Kanal über einen Siebboden von einem dritten Kanal zur Aufnahme der flüssigen Phase getrennt ist, wobei insbesondere der dritte Kanal sich zumindest entlang des Siebbodens parallel zum ersten Kanal bzw. entlang des ersten Kanals erstreckt, und wobei insbesondere jener Siebboden Bestandteil des Mantels der ersten Rohrleitung ist, insbesondere einstückig an den Mantel angeformt ist.

Bevorzugt ist vorgesehen, dass der zweite Kanal bei einer bestimmungsgemäß angeordneten Trenneinrichtung zumindest entlang des Tropfenabscheiders oberhalb des ersten Kanals verläuft. Weiterhin ist bevorzugt vorgesehen, dass bei einer bestimmungsgemäß angeordneten Trenneinrichtung der dritte Kanal zumindest entlang des Siebbodens unterhalb des ersten Kanals verläuft. Vorzugsweise verläuft also der erste Kanal abschnittsweise bezogen auf die Vertikale zwischen dem zweiten und dem dritten Kanal.

Insbesondere bei einem horizontalen oder einem gegenüber der Horizontalen geneigten ersten Kanal ist vorzugsweise vorgesehen, dass das Element auf einer dem ersten Kanal zugewandten Seite erste Mulden mit Durchgangsöffnungen für das Durchströmen der gasförmigen Phase aufweist. Die ersten Mulden können insbesondere als längliche Vertiefungen, insbesondere Nuten, ausgebildet sein. Die ersten Mulden können beispielsweise durch eine im Querschnitt wellenförmige oder gezackte Form des Elementes gebildet werden (z.B. kann das Element als eine gewellte, gestufte oder gezackte Lochplatte ausgebildet sein), wobei sich Durchgangsöffnungen bevorzugt an den höchsten Punkten der ersten Mulden bzw. der Wellen-, Stufen- oder Zackenstruktur befinden, so dass in die ersten Mulden von unten her einströmendes Gas das Element durch jene Durchgangsöffnungen passieren kann. Die ersten Mulden können auch die Form sonstiger Vertiefungen annehmen.

Weiterhin weist das Element bevorzugt auf einer dem ersten Kanal abgewandten Seite zweite Mulden mit Durchgangsöffnungen zum Sammeln bzw. Abströmen von aus dem Tropfenabscheider abfließender flüssiger Phase auf. Diese zweiten Mulden sind ebenfalls bevorzugt als längliche Vertiefungen, insbesondere Nuten, ausgebildet und können ebenfalls durch jene im Querschnitt wellenförmige, gestufte oder gezackte Form des Elementes gebildet werden (siehe oben), wobei sich nun Durchgangsöffnungen bevorzugt an den untersten Punkten der zweiten Mulden bzw. Wellen-, Stufen- oder Zackenstruktur befinden, so dass die aus dem Tropfenabscheider nach unten abfließende flüssige Phase in den zweiten Mulden gesammelt werden kann und durch jene Durchgangsöffnungen nach unten abfließen kann.

Gemäß einer weiteren Ausführungsform der Erfindung ist vorgesehen, dass die erste Rohrleitung zumindest im Bereich des Tropfenabscheiders in einer zweiten Rohrleitung angeordnet ist, so dass der zweite Kanal durch eine Außenseite der ersten Rohrleitung sowie eine Innenseite der zweiten Rohrleitung begrenzt wird. Bei dieser Ausführungsform muss nicht notwendiger Weise ein dritter Kanal vorgesehen sein. Hier wird die entgaste flüssige Phase im ersten Kanal ihrer weiteren Verwendung zugeführt.

Gemäß einer Ausführungsform ist vorgesehen, dass der erste Kanal der oben beschriebenen erfindungsgemäßen Trenneinrichtungen zumindest entlang des Tropfenabscheiders parallel zur Horizontalen verläuft oder eine leichte Neigung gegenüber der Horizontalen aufweist, die vorzugsweise kleiner ist als 3°. Der Tropfenabscheider verläuft bei derartigen Anordnungen ebenfalls entlang der Horizontalen bzw. parallel zum ersten Kanal. Gleiches gilt für das besagte Element, das bei derartigen Anordnungen vorzugsweise auch als ein Träger (z.B. Tragerost) für den Tropfenabscheider ausgebildet ist, der auf dem Element aufliegen kann und durch dieses gestützt bzw. getragen wird.

In einer alternativen, bevorzugten Ausführungsform kann der erste Kanal zumindest entlang des Tropfenabscheiders entlang der Vertikalen verlaufen, wobei insbesondere jenes Element den ersten Kanal umgibt bzw. umläuft. Das Element kann hierbei z.B. eine zylindrische Form annehmen. Ferner ist bei einer solchen vertikalen Ausrichtung vorzugsweise vorgesehen, dass der Tropfenabscheider den ersten Kanal bzw. das besagte Element umgibt bzw. umläuft. Es ist auch möglich, dass der erste Kanal eine leichte Neigung gegenüber der Vertikalen aufweist, die vorzugsweise kleiner ist als 3°.

Gemäß einer Ausführungsform der vorliegenden Erfindung ist vorgesehen, dass die Trenneinrichtung in eine Rohrleitung integriert ist bzw. einen Teil eine Rohrleitung bildet (oder die gesamte Rohrleitung), die z.B. zu einem Apparat (z.B. einer Anlage) führt, in dem die entgaste flüssige Phase verwendet wird, insbesondere derart, dass der Stoffstrom vor dem Eintritt in den Apparat entgast ist. Weiterhin kann eine solche Rohrleitung bzw. die Trenneinrichtung selbst auch einen ersten und einen zweiten Apparat einer Anlage miteinander verbinden, so dass der aus dem ersten Apparat abgezogene Stoffstrom beim Führen in den zweiten Apparat über jene Rohrleitung entgast wird, insbesondere bevor er in den zweiten Apparat eintritt.

Weiterhin betrifft die Erfindung eine Einrichtung gemäß Anspruch 11 mit einem Behälter sowie mit einer erfindungsgemäßen Trenneinrichtung, wobei der Behälter in Fluidverbindung mit dem ersten Kanal steht, so dass die entgaste flüssige Phase in den Behälter einleitbar ist, und wobei jene Trenneinrichtung außerhalb oder innerhalb eines durch den Behälter definierten Innenraumes des Behälters angeordnet ist.

Hierbei kann insbesondere bei einer Anordnung innerhalb des Innenraumes vorgesehen sein, dass der erste Kanal durch eine insbesondere im Querschnitt rechteckförmige und nach oben hin offene Rinne gebildet wird, wobei der erste Kanal nach oben hin durch jenes auf der Rinne angeordnete Element mit Durchgangsöffnungen sowie den auf dem Element aufliegenden Tropfenabscheider von jenem Raum bzw. Innenraum zur Aufnahme der gasförmigen Phase getrennt ist, und wobei vorzugsweise in jener Rinne ein Siebboden oberhalb eines Bodens der Rinne angeordnet ist, der von dem ersten Kanal jenen dritten Kanal der Trenneinrichtung abteilt.

Vorzugsweise weist die Rinne einen Abschnitt auf, der entlang einer Innenseite des Behälters in Form eines Ringkanals umläuft. Hierbei kann z.B. der Mantel des Behälters bzw. eine Innenseite des Behälters eine radial äußere Seitenwand der Rinne bilden.

Besonders bevorzugt wird jene Trenneinrichtung, insbesondere dort, wo sehr große Mengen Flüssigkeit und Gas zu trennen und dann gleichmäßig über einen Querschnitt zu verteilen sind, in einer Einrichtung in Form eines gewickelten Wärmeübertragers verwendet, wobei jener Behälter durch einen Mantel des Wärmeübertragers gebildet wird, und wobei jener Innenraum des Behälters ein durch den Mantel begrenzter Mantelraum des Wärmeübertragers ist. Der Raum zur Aufnahme der gasförmigen Phase ist in diesem Fall bevorzugt ein Bereich des Mantelraumes im Kopf des Wärmeübertragers.

Bei einem solchen gewickelten Wärmeübertrager sind Rohre eines Rohrbündels helikal um ein Kernrohr gewickelt, das sich im Mantelraum entlang der Zylinder- bzw. Längsachse des Mantels erstreckt. Die Trenneinrichtung hat hierbei die Aufgabe, einen zweiphasigen Stoffstrom zu entgasen, der sodann auf das Rohrbündel verteilt wird, so dass ein im Rohrraum geführtes Medium mit der flüssigen Phase indirekte Wärme austauschen kann.

Bevorzugt ist vorgesehen, den zu entgasenden Stoffstrom über Kopf durch das Kernrohr der Trenneinrichtung zuzuführen. Dabei weist der erste Kanal bzw. die besagte Rinne jenen umlaufenden Abschnitt auf sowie bevorzugt erste Arme, die sich jeweils bevorzugt in radialer Richtung erstrecken und das Kernrohr mit dem ringförmigen Abschnitt der Rinne verbinden, so dass der zu entgasende Stoffstrom vom Kernrohr zum ringförmigen Abschnitt der Rinne strömen kann. Dabei sind vorzugsweise Strömungsbremsen, insbesondere in Form von Streckmetallen, in den ersten Armen vorgesehen, wobei die ersten Arme oberhalb der Strömungsbremsen bevorzugt nach oben hin verschlossen sind. Weiterhin weist der erste Kanal bzw. die Rinne zweite Arme auf, die sich jeweils bevorzugt in radialer Richtung vom ringförmigen Abschnitt der Rinne zum Kernrohr erstrecken, so dass der Stoffstrom bzw. die flüssige Phase vom Ringkanal wieder zum Kernrohr führbar ist. Von dort wird die flüssige Phase weiter nach untern geführt und auf das Rohrbündel verteilt.

Mit Ausnahme des nach oben hin verschlossenen Abschnitts der ersten Arme oberhalb der jeweiligen Strömungsbremse ist oberhalb der Rinne, d.h., oberhalb der ersten und zweiten Arme sowie oberhalb des ringförmigen Abschnitts der Rinne je ein Element bzw. ein einheitliches Element mit Durchgangsöffnungen vorgesehen sowie darauf aufliegend ein oder mehrere Tropfenabscheider insbesondere in Form eines oder mehrerer Drahtgestricke.

Weiterhin ist in dem ringförmigen Abschnitt der Rinne sowie den ersten und zweiten Armen jeweils ein Siebboden vorgesehen, der von dem jeweiligen Teil der Rinne einen Abschnitt des dritten Kanals abteilt, in dem die entgaste flüssige Phase geführt wird.

Weiterhin ist gemäß einer Ausgestaltung der Erfindung vorgesehen, dass die Fläche der Rinne (auch als Gerinnefläche bezeichnet) bzw. des ersten Kanals, auf der insbesondere die flüssige Phase bzw. der Stoffstrom strömt, so dimensioniert ist, dass die Flutgeschwindigkeiten des Tropfenabscheiders unterschritten werden. Bevorzugt ist dabei die Aufteilung der Lochfläche (d.h. die Fläche der Durchgangsöffnungen) in den Lochblechen bzw. in den Elementen unterhalb des Tropfenabscheiders bzw. Gestricks dergestalt vorgenommen, dass der Tropfenabscheider bzw. das Gestrick auf seiner gesamten Länge gleichmäßig durchströmt wird. Bevorzugt treten dabei nirgendwo Geschwindigkeiten auf, die größer als die Flutgeschwindigkeiten des Tropfenabscheiders bzw. Gestricks sind.

Weiterhin wird das erfindungsgemäße Problem durch ein Verfahren zum Trennen einer gasförmigen Phase von einer flüssigen Phase eines zweiphasigen Stoffstromes gemäß Anspruch 14 gelöst. Das erfindungsgemäße Verfahren verwendet bevorzugt eine erfindungsgemäße Trenneinrichtung bzw. Einrichtung.

Gemäß Anspruch 14 ist vorgesehen, dass ein zu entgasender Stoffstrom in einem ersten Kanal in einer Strömungsrichtung geführt wird, so dass die gasförmige Phase entlang des ersten Kanals quer zur Strömungsrichtung aus der flüssigen Phase austreten kann, wobei die gasförmige Phase durch Durchgangsöffnungen eines Elementes geführt wird, das den ersten Kanal von einem Raum zur Aufnahme der gasförmigen Phase trennt sowie durch einen Tropfenabscheider, der auf einer dem ersten Kanal abgewandten Seite des Elements angeordnet ist, so dass in der gasförmigen Phase mitgerissene Tropfen der flüssigen Phase vom Tropfenabscheider aus der gasförmigen Phase abgeschieden werden.

Bevorzugt ist bei dem erfindungsgemäßen Verfahren vorgesehen, dass die flüssige Phase aus dem ersten Kanal über einen Siebboden, der den ersten Kanal von einem dritten Kanal abteilt, in den dritten Kanal abgezogen wird.

Weitere Merkmale und Vorteile der Erfindung sollen bei den nachfolgenden Figurenbeschreibungen von Ausführungsbeispielen der Erfindung anhand der Figuren erläutert werden.

Es zeigen:
- Fig. 1: eine schematische Schnittansicht einer Ausführungsform der erfindungsgemäßen Trenneinrichtung;
- Fig. 2: eine perspektivische, geschnittene Ansicht der Ausführungsform gemäß Figur 1;
- Fig. 3: eine perspektivische, geschnittene Ansicht einer weiteren Ausführungsform einer erfindungsgemäßen Trenneinrichtung, bei der eine erste Rohrleitung in einer zweiten Rohrleitung angeordnet ist;
- Fig. 4: eine perspektivische, geschnittene Ansicht einer weiteren Ausführungsform einer erfindungsgemäßen Trenneinrichtung, bei der eine erste Rohrleitung in einer zweiten Rohrleitung angeordnet ist;
- Fig. 5: eine perspektivische Ansicht einer Trenneinrichtung, die den zu entgasenden Stoffstrom zu einem Behälter transportiert und dabei entgast;
- Fig. 6: eine schematische Schnittansicht einer weiteren Ausführungsform einer erfindungsgemäßen Trenneinrichtung, bei der der erste Kanal im Bereich des Tropfenabscheiders vertikal verläuft;
- Fig. 7: eine Schnittansicht eines gewickelten Wärmeübertragers mit einer erfindungsgemäßen Trenneinrichtung, die im Mantelraum des Wärmeübertragers angeordnet ist; und
- Fig. 8: weitere Schnittansichten des Wärmeübertragers gemäß Figur 7.

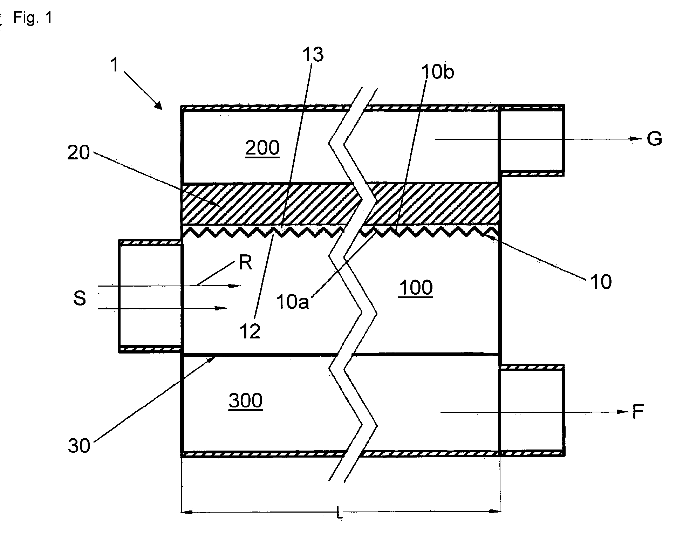

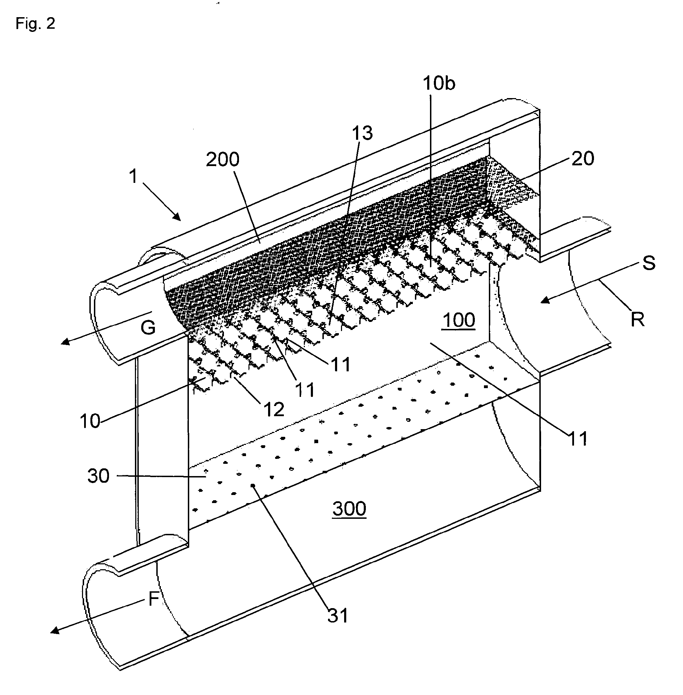

Figur 1 zeigt im Zusammenhang mit Figur 2 eine Ausführungsform einer erfindungsgemäßen Trenneinrichtung 1 zum Abscheiden einer gasförmigen Phase G aus einer zweiphasigen Stoffströmung S, die in einer Strömungsrichtung R in einem ersten Kanal 100 geführt wird, so dass die in dem zweiphasigen Stoffstrom S mitgeführte gasförmige Phase G senkrecht zur Strömungsrichtung R, d.h., vorwiegend entlang der Vertikalen nach oben, aus der flüssigen Phase F ausgasen kann, wobei die gasförmige Phase G zunächst durch Durchgangsöffnungen 11 eines Elementes 10 strömt, das vorliegend als eine Lochplatte 10 ausgeführt ist, wobei die gasförmige Phase G sodann durch einen auf dieser Lochplatte 10 aufliegenden Tropfenabscheider 20, der vorliegend z.B. als Drahtgestrick ausgeführt ist, aufsteigt, wobei etwaige in der gasförmigen Phase G mitgerissene Tröpfchen der flüssigen Phasen F durch das Drahtgestrick bzw. den Tropfenabscheider 20 zurückgehalten werden und entlang der Vertikalen nach unten zur Lochplatte 10 zurückfließen. Die Lochplatte 10, die vorzugsweise aus einem Metall gefertigt ist, weist eine gewellte bzw. gezackte Struktur auf, sodass an einer dem ersten Kanal 100 zugewandten Unterseite 10a der Lochplatte 10 eine Mehrzahl an ersten Mulden 12 in Form von parallelen Vertiefungen 12 ausgebildet sind, in denen sich jeweils die gasförmige Phase G sammeln kann, wobei jeweils am höchsten Punkt der jeweiligen Vertiefung 12 Durchgangsöffnungen 11 ausgebildet sind, sodass die gasförmige Phase G durch jene Vertiefungen 12 in Richtung auf den Tropfenabscheider 20 geführt wird. Gleichfalls sind auf einer dem ersten Kanal 100 abgewandten Seite 10b des Lochblechs 10 zweite Mulden 13 in Form von länglichen Vertiefungen 13 ausgebildet, in denen die auf den Tropfenabscheider 20 zurückfließende flüssige Phase,F gesammelt wird, wobei hier jeweils an den Tiefpunkten jener Vertiefungen 13 wiederum Durchgangsöffnungen vorgesehen sind, so dass die in jenen Vertiefungen 13 gesammelte flüssige Phase F durch die besagten Durchgangsöffnungen 11 in den ersten Kanal 100 zurückströmen kann. Der Vorteil der oben beschriebenen Konfiguration liegt insbesondere darin, dass die gasförmige Phase G auf einer gesamten Länge L des ersten Kanals 100 entlang der Strömungsrichtung R bzw. entlang der Erstreckungsrichtung des ersten Kanals 100 aus der flüssigen Phase F entgasen kann und in einem darüber angeordneten parallelen zweiten Kanal 200 abgezogen werden kann, wobei mitgerissene Tröpfchen durch die vorstehend beschriebene Konfiguration der Lochplatte 10 und des Tropfenabscheiders 20 zurückgehalten werden. Hierdurch wird mit Vorteil eine entlang der Vertikalen äußerst kompakte Bauform erzielt, die insbesondere auch den Einsatz der erfindungsgemäßen Trenneinrichtung 1 als einen integralen Bestandteil von Rohrleitungen erlaubt. Somit kann mit Vorteil die Funktion des Abscheiders aus einem Apparat einer verfahrenstechnischen Anlage herausgelöst werden und in die ohnehin vorhandenen Rohrleitungen verlagert werden. Hiermit werden die Rohrleitungen über den Transport von Stoffströmen hinaus funktional genutzt und die besagten Apparate, die mittels jener Rohrleitungen verbunden sind, können entsprechend kompakter ausfallen.

Bevorzugt strömt die flüssige Phase F aus dem ersten Kanal 100 über einen Durchgangsöffnungen 31 aufweisenden Siebboden 30 des ersten Kanals 100 hindurch in einen dritten Kanal 300, der bevorzugt über die Länge L des Siebbodens 30 parallel zum ersten bzw. zweiten Kanal 100, 200 verläuft, und zwar entlang der Vertikalen unterhalb des ersten Kanals 100.

Die besagte Kanäle 100, 200, 300 können jeweils als Rohrleitungen ausgebildet sein. Entsprechend kann das besagte Element 10 bzw. die Lochplatte 10 ebenso wie der Siebboden 30 eine Krümmung aufweisen, die einer umfänglichen Krümmung des ersten Kanals 100 bzw. einer entsprechenden Rohrleitung angepasst sein kann. Insbesondere können sowohl das Element 10 bzw. die Lochplatte 10 als auch der Siebboden 30 integrale Bestandteile einer entsprechenden Rohrleitung darstellen bzw. einstückig an eine solche Rohrleitung angeformt sein. Ferner kann es sich bei den Rohleitungen auch um Rechteckkanäle handeln, die auch innerhalb eines Behälters verlegt sein können, wobei die Behälterwandung eine Begrenzung des Kanals darstellen kann.

Des Weiteren können die das Gas und die Flüssigkeiten abführenden Kanäle 200 und 300 so orientiert sein, dass die Strömungsrichtung der gasförmigen Phase G und der flüssigen Phase F der des zweiphasigen Stoffstroms S entgegengesetzt ist.

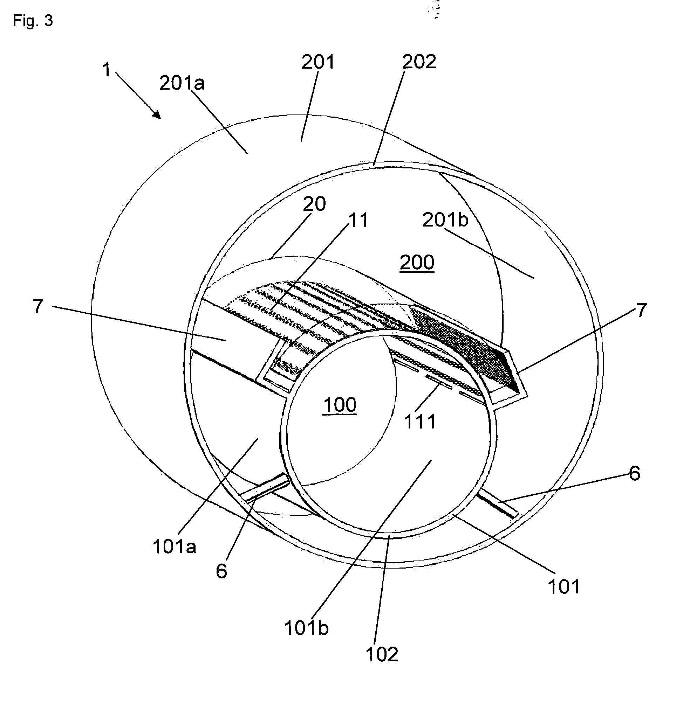

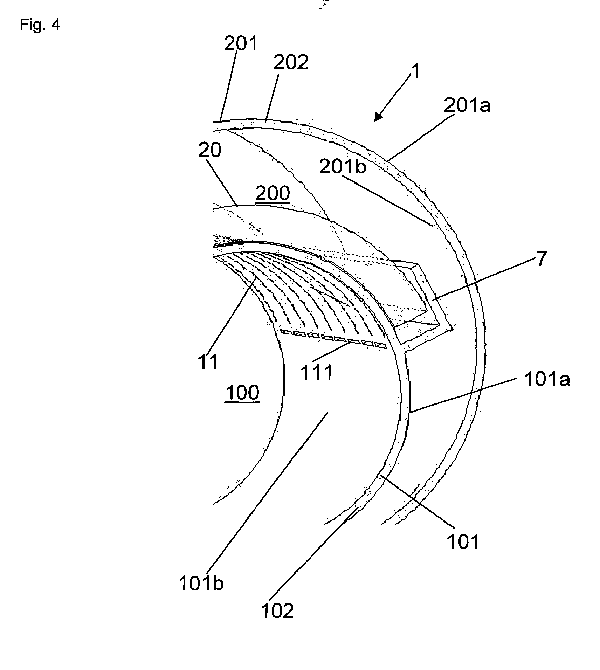

Figur 3 zeigt eine weitere Ausführungsform der vorliegenden Erfindung, die insbesondere für eine Integration der Trenneinrichtung in eine Rohrleitung (hier die zweite Rohrleitung 201) geeignet ist. Bei dieser Ausführungsform ist kein dritter Kanal 300 vorhanden, sondern der erste und der zweite Kanal 100, 200 werden durch eine erste und eine zweite Rohrleitung 101, 201 gebildet, wobei die erste Rohrleitung 101, die den ersten Kanal 200 begrenzt, in der zweiten Rohrleitung 201 angeordnet ist, so dass der zweite Kanal 200, der zum Abziehen der gasförmigen Phase G dient, durch eine Außenseite 101a eines Mantels 102 der ersten Rohrleitung 101 sowie durch eine Innenseite 201 b eines Mantels 202 der zweiten Rohrleitung 201 begrenzt wird. Das besagte Element 10 bzw. die Lochplatte 10 ist nunmehr ein Bestandteil der ersten Rohrleitung 101 und insbesondere einstückig an diese angeformt. Das Element 10 kann dabei beispielsweise dadurch ausgebildet werden, dass die besagten Durchgangsöffnungen 11 direkt in den Mantel 102 der ersten Rohrleitung 101 eingebracht werden. Das hat den Vorteil großer Stabilität, was dort wichtig ist, wo die Zweiphasenströmung schwallartig auftritt und daher Einbauten in Rohleitungen nicht zulässig sind, wie z.B Gas-Pipelines oder Fackelgasleitungen. Am vorteilhaftesten ist es, wenn die Durchgangsöffnungen 11 gemäß Fig. 4 schlitzförmig oder linienförmig quer zur Rohrleitung 101 angeordnet sind, wobei vorzugsweise Drainage- bzw. Entwässerungsbohrungen 111 zwischen diesen in Reihe angeordneten Durchgangsöffnungen 11 angeordnet sind. Auf dem Element 10 liegt, wie bereits beschrieben, der Tropfenabscheider 20 auf, der hier der umfänglichen Krümmung der ersten Rohrleitung 101 folgt und entsprechend eine konvexe Krümmung aufweist. Der Tropfenabscheider 20 ist dabei in zwei Halteelementen 7 gehalten, die jeweils einen Randbereich des Tropfenabscheiders 20 umgreifen, so dass der Tropfenabscheider 20 in radialer Richtung der ersten Rohrleitung 101 an der ersten Rohrleitung 101 festgelegt ist. Strömt nun ein zweiphasiger Stoffstrom S in der Strömungsrichtung R durch den ersten Kanal 100 bzw. die erste Rohrleitung 101, so kann wiederum die gasförmige Phase G senkrecht zur Strömungsrichtung R aus der flüssigen Phase F ausgasen und durch die Durchgangsöffnungen 11 sowie den Tropfenabscheider 20 in den umgebenden zweiten Kanal 200 bzw. in die zweite Rohrleitung 201 aufsteigen, von wo aus die gasförmige Phase G abgezogen werden kann.

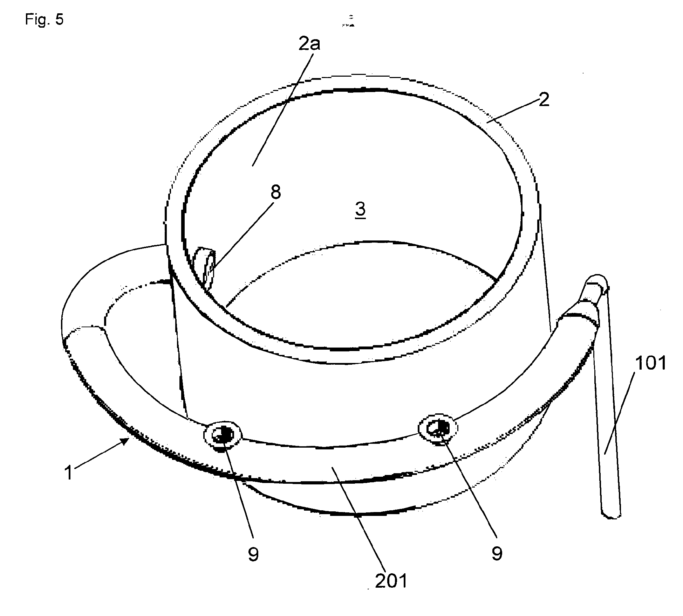

Figur 5 zeigt den Einsatz einer solchen Trenneinrichtung 1 bei einem Behälter 2, wobei die erste Rohrleitung 101 einen vertikal entlang des Behälters 2 aufsteigenden Abschnitt aufweist, der in einen horizontalen Abschnitt übergeht, der entlang des Behälters 2 verläuft. In der ersten Rohrleitung 101 wird der zweiphasige Stoffstrom S zur Trenneinrichtung 1 transportiert, wobei der horizontale Abschnitt von der zweiten Rohrleitung 201 z.B. gemäß Figur 3 bzw. 4 umgeben ist. Zum Abziehen der gasförmigen Phase G weist die Trenneinrichtung 1 gemäß Figur 5 zwei Auslassöffnungen 9 auf. Die flüssige Phase F kann schließlich über einen Auslass 8 der ersten Rohrleitung 101, der in den Innenraum 3 des Behälters 2 mündet, in den Behälter 2 einströmen.

Die erfindungsgemäße Anordnung der Trenneinrichtung 1 gemäß Figur 5 außerhalb des Innenraumes 3 des Behälters 2 erlaubt mit Vorteil eine Trennung der gasförmigen von der flüssigen Phase F eines zweiphasigen Stoffstromes S bereits außerhalb des Behälters 2, so dass der Behälter 2 entsprechend keine derartige Trenneinrichtung vorsehen muss und daher viel kompakter konstruiert werden kann.

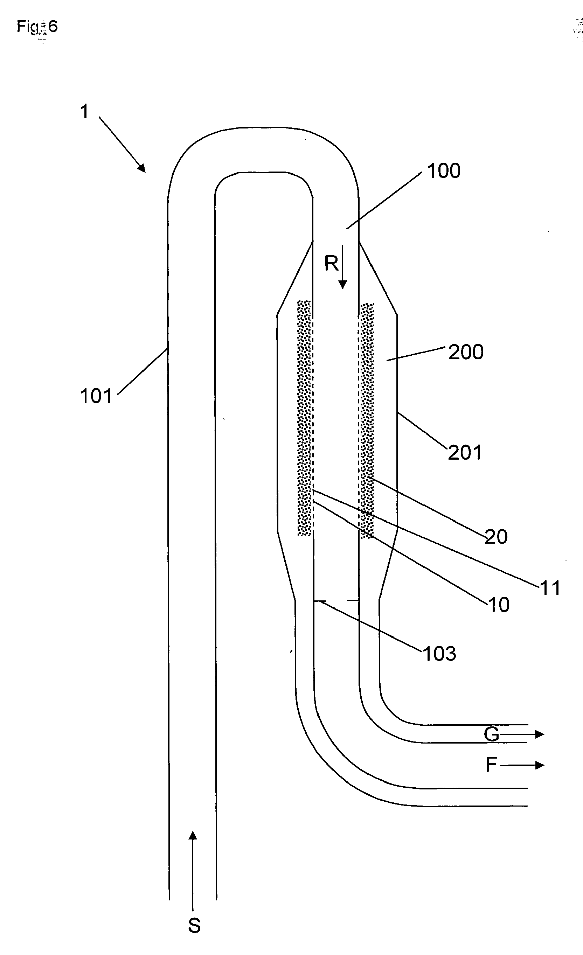

Die erfindungsgemäße Trenneinrichtung 1 kann nicht nur, was Ihre Kanäle 100, 200, 300 anbelangt, einen im Wesentlichen horizontalen Verlauf aufweisen, wie er in den Figuren 1 - 5 gezeigt ist, sondern auch gemäß Figur 6 einen vertikalen Verlauf. Hierbei wird der zweiphasige Stoffstrom S in der ersten Rohrleitung 101 gemäß Figur 6 entlang der Vertikalen nach oben geführt, wobei die erste Rohrleitung 101 dann eine Krümmung aufweist, so dass der zweiphasige Stoffstrom S entlang der Vertikalen in einer Strömungsrichtung R wieder nach unten geführt wird. Dieser Abschnitt der ersten Rohrleitung 101 weist einen umlaufenden Mantelabschnitt auf, der das besagte Element 10 bildet, das vorliegend z. B. als ein gelochter bzw. perforierter Bereich des Mantels der ersten Rohrleitung 101 ausgebildet ist. Das mit entsprechenden Durchgangsöffnungen 11 versehene Element 10 ist dabei von einem Tropfenabscheider 20 umgeben, der das besagte Element 10 in einem senkrecht zur Strömungsrichtung R verlaufenden Querschnitt umgreift. Die gasförmige Phase G kann hierbei wiederum senkrecht zur Strömungsrichtung R, das heißt vorliegend entlang der Horizontalen, aus der flüssigen Phase F austreten, und zwar über die gesamte Länge des Elementes 10 bzw. des Tropfenabscheiders 20, wobei die gasförmige Phase G wiederum in einer umgebenden zweiten Rohrleitung 201 nach dem Prinzip der Figur 3 bzw. 4 geführt bzw. abgezogen werden kann. Unterhalb des Tropfenabscheiders 20 bzw. des Elements 10 ist in der ersten Rohrleitung 101 bzw. im ersten Kanal 100 eine Verengung 103 vorgesehen, die vorzugsweise so dimensioniert ist, dass sich hier abgeschiedene Flüssigkeit aufstaut. Falls zu wenig Flüssigkeit anfällt, ist auch eine Weiterführung der Rohrleitung in Form eines Schwanenhalses möglich, der mit Flüssigkeit gefüllt werden muss. Sinn dieser Verengung ist es, dass das Gas komplett durch den Abscheider geht und nicht den Weg des Flüssigkeitswegs nimmt.

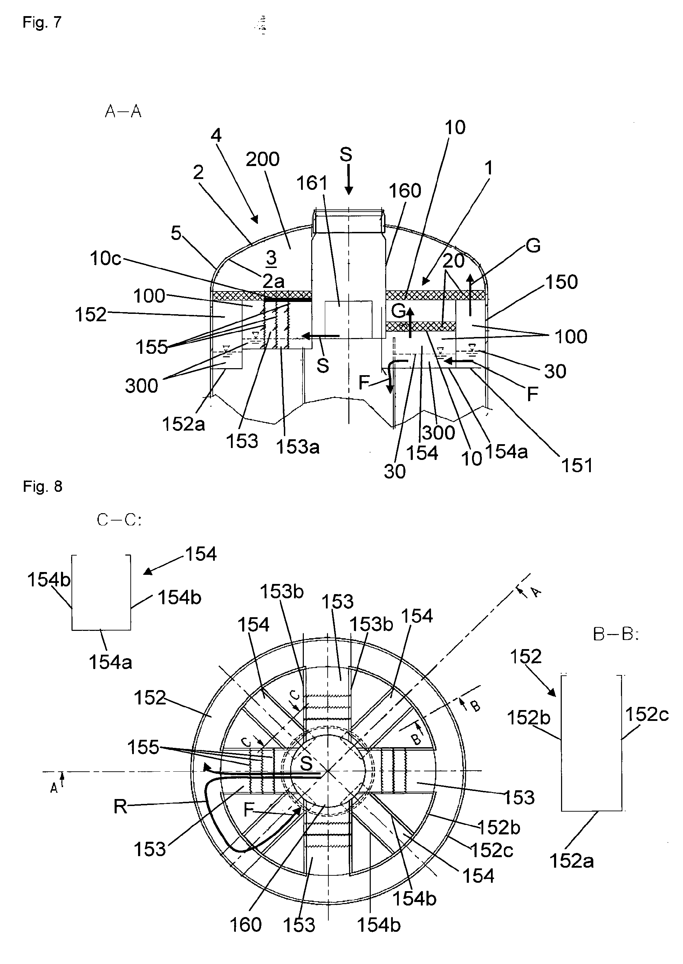

Wie in den Figuren 7 und 8 gezeigt, kann die erfindungsgemäße Trenneinrichtung 1 jedoch nicht nur dazu verwendet werden, bestehende Rohrleitungen mit einer erfindungsgemäßen Trennfunktion auszustatten, sondern erlaubt auch einen in vertikaler Richtung äußerst platzsparenden Einbau in den Kopf eines Behälters 2, insbesondere eines Wärmeübertragers 4, wie er in den Figuren 7 und 8 dargestellt ist. Ein solcher Wärmeübertrager 4 weist einen Mantel 5 auf, der einen Innenraum bzw. Mantelraum 3 des Wärmeübertragers 4 umgibt, wobei sich in dem Mantelraum 3 ein Kernrohr 160 entlang einer vertikal ausgerichteten Längsachse des Wärmeübertragers 4 erstreckt. Ein solcher Wärmeübertrager 4 weist einen Flüssigkeitsverteiler auf, mit dem eine flüssige Phase F auf das Rohrbündel verteilt werden soll. Um diese flüssige Phase F zu erhalten, muss zunächst aus einem zumeist zweiphasigen Stoffstrom S (in der Regel Kohlenwasserstoffe) der eine flüssige Phase F sowie eine gasförmige Phase G aufweist, die gasförmige Phase abgeschieden werden. Dieser zweiphasige Stoffstrom S wird vorliegend über das Kernrohr 160 in den Wärmeübertrager 4 geführt, tritt dann in radialer Richtung aus dem Kernrohr 160 aus und wird in eine erfindungsgemäße Trenneinrichtung 1 eingeleitet, die z.B. im Kopf des Mantelraumes 3 des Wärmeübertragers 160 angeordnet ist. Die Trenneinrichtung 1 weist eine Rinne 150 auf, die im Querschnitt rechteckförmig und nach oben hin offen ausgebildet ist (vergleiche Figur 8). Diese Rinne 150 weist dabei einen ringförmigen Abschnitt 152 auf, der sich entlang einer Innenseite 2a des Mantels 5 umlaufend erstreckt, wobei eine äußere Seitenwand 152c dieses ringförmigen Abschnitts 152 der Rinne 150 durch den Mantel 5 bzw. jene Innenseite 2a des Wärmeübertragers 4 gebildet sein kann. Weiterhin weist der ringförmige Abschnitt 142 der Rinne 150 eine nach innen gewandte Seitenwand 152b auf. Die Rinne 150, die auch als Gerinne bezeichnet wird, weist des Weiteren bevorzugt vier erste Arme 153 auf, die sich vom Kernrohr 160 in radialer Richtung zu dem ringförmigen Abschnitt 152 der Rinne 150 erstrecken, so dass der zu entgasende zweiphasige Stoffstrom S aus dem Kernrohr 160 über die vorliegend vier ersten Arme 153 in den ringförmigen Abschnitt 152 der Rinne 150 strömen kann. Weiterhin weist die Rinne 150 bevorzugt vier zweite Arme 154 auf, die sich wiederum in radialer Richtung vom äußeren ringförmigen Abschnitt 152 der Rinne 150 zum Kernrohr 160 zurück erstrecken, so dass die in dem äußeren ringförmigen Abschnitt 152 befindliche flüssige Phase F bzw. der zweiphasiger Stoffstrom S zum Kernrohr 160 zurückströmen kann, wobei die flüssige Phase F dann im Kernrohr 160 nach unten geführt wird und sodann mittels eines nicht gezeigten Verteilers auf das Rohrbündel des Wärmeübertragers 160 verteilt wird. Gemäß der erfindungsgemäßen Lösung wird mit Vorteil fast der gesamte Strömungsweg des zweiphasigen Stoffstromes S bzw. der flüssigen Phase F vom Kernrohr 160 weg zum äußeren Abschnitt 152 der Rinne 150 hin und wieder zurück zum Kernrohr 160 zum Entgasen des zweiphasigen Stoffstromes S verwendet. Die gasförmige Phase G kann nämlich senkrecht zu einer Strömungsrichtung R des zweiphasigen Stoffstromes S aus diesem austreten und wird dann entlang der Vertikalen nach oben geführt, wobei sie zunächst durch die Lochplatte 10 (vergleiche oben) tritt, die über der nach oben gerichteten Öffnung der Rinne 150 liegt, wobei auf der Lochplatte 10 ein Tropfenabscheider 20 aufliegt, der etwaige in der gasförmigen Phase G mitgerissene Tropfen der flüssigen Phase F abscheidet und in die Rinne 150 zurückgibt (vgl. oben).

Im Einzelnen kann die besagte Lochplatte 10 bzw. das Element 10 sowie der Tropfenabscheider 20 mehrteilig ausgebildet sein. Die einzelnen Teile des Elements 10 sind dann sowohl über dem äußeren ringförmigen Abschnitt 152 der Rinne 150 angeordnet, als auch entlang der Vertikalen oberhalb der ersten und zweiten Arme 153, 154 der Rinne 150. Entsprechend sind auf den jeweiligen Lochplattenteilen Tropfenabscheider 20 vorgesehen, wie oben beschrieben. Hierbei ist zu beachten, dass in den ersten Armen 153 Strömungsbremsen, z. B. in Form von Streckmetallen 155, angeordnet sein können, um den zweiphasigen Stoffstrom S auf den zur Verfügung stehenden Querschnitt auszubreiten, wobei der Bereich oberhalb der Streckmetalle bzw. Strömungsbremsen 155 jeweils durch eine geschlossene Decke 10b verschlossen ist. Wie bereits beschrieben, teilt die Lochplatte 10 bzw. die mehreren Lochplatten 10 einen durch die Rinne 150 begrenzten ersten Kanal 100, in den das zweiphasige Stoffgemisch S zunächst eingeströmt wird von einem Raum 200 im Kopf des Mantelraumes 3 ab, der zur Aufnahme der gasförmige Phase G dient. Des Weiteren weist die Rinne 150 einen Durchgangsöffnungen 31 aufweisenden Siebboden 30 auf (vgl. oben), der von der Rinne 150 einen dritten Kanal 300 bzw. Strömungspfad abteilt. Auch hier kann der Siebboden 30 ggf. mehrteilig ausgebildet sein, wobei die einzelnen Teile 30 im äußeren umlaufenden Abschnitt 152 sowie in den ersten und zweiten Armen 153, 154 vorgesehen sind. Die im ersten Kanal 100 geführte flüssige Phase F sickert entlang ihres Strömungsweges durch den Siebboden 30 in den dritten Kanal 300 ein, in dem die entgaste flüssige Phase F zum Kernyrohr 160 zurückströmt. Gemäß den Figuren 7 und 8 weisen die einzelnen Teile 152, 153, 154 des Gerinnes 150 einen horizontalen Verlauf auf, wobei jedoch insbesondere die Arme 153, 154 gegebenenfalls gegenüber der Horizontalen eine Neigung aufweisen können. Im Zusammenhang mit einem gewickelten Wärmeübertrager 4 ermöglicht die erfindungsgemäße Trenneinrichtung 1 somit eine optimale Ausnutzung des horizontal zur Verfügung stehenden Raumes zur Entgasung eines zweiphasigen Stoffstromes S, da dieser entlang seiner gesamten Strömungsführung in im Wesentlichen horizontaler Richtung senkrecht zur Strömungsrichtung R, d.h., in vertikaler Richtung entgasen kann. Entsprechend weist die erfindungsgemäße Trenneinrichtung 1 gegenüber einem Prallblechsystem, das im Vergleich dazu eine relativ große Ausrichtung entlang der Vertikalen hat, einen vorteilhaften geringen Bauraumbedarf in der vertikalen Richtung auf. Die gesamte Gerinnefläche ist vorzugsweise flächenmäßig so dimensioniert, dass die Flutgeschwindigkeiten des Gestricks/Abscheiders unterschritten werden. Bevorzugt ist dabei eine Aufteilung der Lochfläche in den Lochblechen unterhalb des Gestricks in der Weise, dass das Gestrick auf seiner gesamten Länge gleichmäßig durchströmt wird. Vorzugsweise ist hierbei vorgesehen, dass nirgendwo Geschwindigkeiten auftreten, die größer als die Flutgeschwindigkeiten des Gestricks sind.

**Bezugszeichenliste**

| | |
|---|---|
| 1 | Trenneinrichtung |
| 2 | Behälter |
| 2a | Innenseite |
| 3 | Innenraum bzw. Mantelraum |
| 4 | Gewickelter Wärmeübetrager |
| 5 | Mantek |
| 8 | Auslassöffnung |
| 9 | Auslassöffnung |
| 10 | Element |
| 10a, 10b | Seite |
| 10c | Verschlossene Decke |
| 11 | Durchgangsöffnungen |
| 12 | Erste Mulde |
| 13 | Zweite Mulde |
| 20 | Tropfenabscheider |
| 30 | Siebboden |
| 31 | Durchgangsöffnungen |
| 100 | Erster Kanal |
| 101 | Erste Rohrleitung |
| 101a | Außenseite |
| 101b | Innenseite |
| 102 | Mantel |
| 103 | Verengung |
| 111 | Unterste Durchgangsöffnungen |
| 150 | Rinne |
| 151 | Boden |
| 152 | Abschnitt |
| 152a, 153a, 154a | Boden |
| 152b, 152c, 153b, 154b | Seitenwand |
| 153 | Erster Arm |
| 154 | Zweiter Arm |
| 200 | Raum bzw. zweiter Kanal |
| 201 | Zweite Rohrleitung |
| 201a | Außenseite |
| 201b | Innenseite |
| 202 | Mantel |
| 300 | Dritter Kanal |
| F | Flüssige Phase |
| G | Gasförmige Phase |
| S | Zweiphasiger Stoffstrom |

## Patentansprüche

1. Trenneinrichtung (1) zum Trennen einer gasförmigen Phase (G) von einer flüssigen Phase (F) eines zweiphasigen Stoffstromes (S), mit:
- einem ersten Kanal (100) zum Führen des zu entgasenden Stoffstromes (S) in einer entlang des Kanals (100) erstreckten Strömungsrichtung (R), und
- einem Raum (200) zur Aufnahme der gasförmigen Phase (G),
**dadurch gekennzeichnet,**
**dass** der erste Kanal (100) durch ein Element (10) mit einer Mehrzahl an Durchgangsöffnungen (11), das sich entlang des ersten Kanals (100) erstreckt, von dem Raum (200) abgeteilt ist, wobei ein entlang des ersten Kanals (100) erstreckter Tropfenabscheider (20) auf einer dem ersten Kanal (100) abgewandten Seite des Elements (10) angeordnet ist, so dass die gasförmige Phase (G) quer zur Strömungsrichtung (R) des Stoffstromes (S) durch jene Durchgangsöffnungen (11) des Elementes (10) sowie den Tropfenabscheider (20) hindurchtreten und in jenen Raum (200) gelangen kann, wobei der Tropfenabscheider (20) dazu ausgebildet ist, in der gasförmige Phase (G) mitgerissene Tropfen der flüssigen Phase (F) zurückzuhalten.

2. Trenneinrichtung nach Anspruch 1, **dadurch gekennzeichnet, dass** der Raum (200) durch einen zweiten Kanal gebildet wird, der sich zumindest entlang des Tropfenabscheiders (20) parallel zum ersten Kanal (100) oder entlang des ersten Kanals (100) erstreckt.

3. Trenneinrichtung nach Anspruch 1 oder 2, **dadurch gekennzeichnet, dass** der erste Kanal (100) durch eine erste Rohrleitung (101) begrenzt wird, wobei insbesondere jenes Element (10) Bestandteil eines Mantels (102) der ersten Rohrleitung (101) ist, insbesondere einstückig an den Mantel (102) angeformt ist.

4. Trenneinrichtung nach einem der vorhergehenden Ansprüche, **dadurch gekennzeichnet, dass** der erste Kanal (100) über einen Siebboden (30) von einem dritten Kanal (300) zur Aufnahme der flüssigen Phase (F) getrennt ist, wobei insbesondere der dritte Kanal (300) sich zumindest entlang des Siebbodens (30) parallel zum ersten Kanal (100) oder entlang des ersten Kanals (100) erstreckt, und wobei insbesondere jener Siebboden (30) Bestandteil des Mantels (102) der ersten Rohrleitung (101) ist, insbesondere einstückig an den Mantel (102) angeformt ist.

5. Trenneinrichtung nach einem der vorhergehenden Ansprüche, **dadurch gekennzeichnet, dass** der zweite Kanal (200) zumindest entlang des Tropfenabscheiders (20) oberhalb des ersten Kanals (100) verläuft, und/oder dass der dritte Kanal (300) zumindest entlang des Siebbodens (30) unterhalb des ersten Kanals (100) verläuft.

6. Trenneinrichtung nach einem der vorhergehenden Ansprüche, **dadurch gekennzeichnet, dass** das Element (10) auf einer dem ersten Kanal (100) zugewandten Seite (10a) erste Mulden (12) mit Durchgangsöffnungen (11) für das Durchströmen der gasförmigen Phase (G) aufweist, und/oder dass das Element (10) auf einer dem ersten Kanal (100) abgewandten Seite (10b) zweite Mulden (13) mit Durchgangsöffnungen (11) zum Abströmen von aus dem Tropfenabscheider (20) abfließender und in den zweiten Mulden (13) gesammelter flüssiger Phase (F) aufweist.

7. Trenneinrichtung nach Anspruch 2 oder 3, **dadurch gekennzeichnet, dass** die erste Rohrleitung (101) zumindest im Bereich des Tropfenabscheiders (20) in einer zweiten Rohrleitung (201) angeordnet ist, so dass der zweite Kanal (200) durch eine Außenseite (101 a) der ersten Rohrleitung (101) sowie eine Innenseite (201 b) der zweiten Rohrleitung (201) begrenzt wird.

8. Trenneinrichtung nach einem der vorhergehenden Ansprüche, **dadurch gekennzeichnet, dass** der erste Kanal (100) zumindest entlang des Tropfenabscheiders (20) parallel zur Horizontalen verläuft oder eine Neigung gegenüber der Horizontalen aufweist.

9. Trenneinrichtung nach Anspruch 7, **dadurch gekennzeichnet, dass** der erste Kanal (100) zumindest entlang des Tropfenabscheiders (20) entlang der Vertikalen verläuft, wobei insbesondere jenes Element (10) und/oder der Tropfenabscheider (20) den ersten Kanal (100) umgeben.

10. Trenneinrichtung nach einem der vorhergehenden Ansprüche, **dadurch gekennzeichnet, dass** die Trenneinrichtung (1) in eine Rohrleitung (201) integriert ist.

11. Einrichtung mit einem Behälter (2) sowie einer Trenneinrichtung (1) nach einem der vorhergehenden Ansprüche, wobei der Behälter (2) in Fluidverbindung mit dem ersten Kanal (100) steht, so dass die flüssige Phase (F) in den Behälter (2) einleitbar ist, und wobei jene Trenneinrichtung (1) außerhalb oder innerhalb eines durch den Behälter (2) definierten Innenraumes (3) des Behälters (2) angeordnet ist.

12. Einrichtung nach Anspruch 11, **dadurch gekennzeichnet, dass** der erste Kanal (100), insbesondere bei einer im Innenraum (3) des Behälters (2) angeordneten Trenneinrichtung (1), durch eine Rinne (150) begrenzt wird, die insbesondere im Querschnitt rechteckförmig und nach oben hin offen ausgebildet ist, wobei der erste Kanal (100) nach oben hin durch jenes Element (10) sowie den darauf aufliegenden Tropfenabscheider (20) von jenem Raum (200) zur Aufnahme der gasförmigen Phase (G), der insbesondere ein Bereich des Innenraumes (3) ist, abgeteilt ist, und wobei insbesondere in jener Rinne (150) ein Siebboden (30) oberhalb eines Bodens (151, 152a, 153a, 154a) der Rinne (150) angeordnet ist, der von dem ersten Kanal (100) jenen dritten Kanal (300) abteilt.

13. Einrichtung nach Anspruch 12, **dadurch gekennzeichnet, dass** die Rinne (150) einen Abschnitt (152) aufweist, der entlang einer Innenseite (2a) des Behälters (2) umläuft, wobei insbesondere jene Innenseite (2a) eine Seitenwand der Rinne (150) bildet.

14. Verfahren zum Trennen einer gasförmigen Phase (G) von einer flüssigen Phase (F) eines zweiphasigen Stoffstromes (S), insbesondere unter Verwendung einer Trenneinrichtung (1) nach einem der Ansprüche 1 bis 10 oder einer Einrichtung nach einem der Ansprüche 11 bis 13, wobei ein zu entgasender Stoffstrom (S) in einem ersten Kanal (100) in einer Strömungsrichtung (E) geführt wird, so dass die gasförmige Phase (G) quer zur Strömungsrichtung (R) aus der flüssigen Phase (F) austreten kann, wobei die gasförmige Phase (G) durch Durchgangsöffnungen (11) eines Elementes (10) geführt wird, das den ersten Kanal (100) von einem Raum (200) zur Aufnahme der gasförmigen Phase (G) abteilt sowie durch einen Tropfenabscheider (20), der auf einer dem ersten Kanal (100) abgewandten Seite des Elements (10) angeordnet ist, so dass in der gasförmigen Phase (G) mitgerissene Tropfen der flüssigen Phase (F) vom Tropfenabscheider (20) zurückgehalten werden.

15. Verfahren nach Anspruch 14, **dadurch gekennzeichnet, dass** die flüssige Phase (F) aus dem ersten Kanal (100) über einen Siebboden (30), der den ersten Kanal (100) von einem dritten Kanal (300) abteilt, in den dritten Kanal (300) abgezogen wird.
